Europäisches Patentamt

European Patent Office

Office européen des brevets

(11) Veröffentlichungsnummer: **0 196 995**
**B1**

(12) **EUROPÄISCHE PATENTSCHRIFT**

(45) Veröffentlichungstag der Patentschrift:
**04.10.89**

(51) Int. Cl.⁴: **H02K 17/18,** H02K 17/16,
H02K 19/14, H02K 3/16

(21) Anmeldenummer: **86730060.0**

(22) Anmeldetag: **01.04.86**

(54) **Elektrische Maschine synchroner oder asynchroner Bauart.**

(30) Priorität: **04.04.85 DE 3512869**

(43) Veröffentlichungstag der Anmeldung:
**08.10.86 Patentblatt 86/41**

(45) Bekanntmachung des Hinweises auf die Patenterteilung:
**04.10.89 Patentblatt 89/40**

(84) Benannte Vertragsstaaten:
**CH DE LI SE**

(56) Entgegenhaltungen:
**DE-C- 326 035**
**FR-A- 1 323 204**
**US-A- 3 335 308**

**PATENTS ABSTRACTS OF JAPAN, Band 8,
Nr. 127(E-250)[1564], 14. Juni 1984; & JP - A
- 59 37 869 (TOKYO SHIBAURA DENKI K.K.) 01.03.1984**

(73) Patentinhaber: **Siemens Aktiengesellschaft,
Wittelsbacherplatz 2, D-8000 München 2(DE)**

(72) Erfinder: **Reppe, Klaus, Ing. (grad.), Burscheider
Weg 18g, D-1000 Berlin 20(DE)**

ACTORUM AG

**Beschreibung**

Die Erfindung bezieht sich auf eine elektrische Maschine synchroner oder asynchroner Bauart mit einer Käfigwicklung in einem genuteten Läuferblechpaket, bei der in den Nuten der Käfigwicklung zwei sich im wesentlichen in axialer Richtung erstreckende, in radialer Richtung ohne galvanischen Kontakt übereinanderliegende Stäbe angeordnet sind, wobei nur die radial innenliegenden Stäbe der Käfigwicklung durch Kurzschlußringe an den Stirnseiten des Blechpaketes untereinander verbunden und wenigstens die radial außenliegenden Stäbe gegenüber dem Läuferblechpaket isoliert sind.

Eine derartige elektrische Maschine ist aus der ASEA-Broschüre OK 20-101 T, "Große Drehstrommaschinen 800 - 22 000 kW", Ausgabe 1, November 1970 (insbesondere Seite 20) bekannt. Bei der bekannten Maschine handelt es sich um einen asynchronen Stromverdrängungsmotor, bei dem in den radial innenliegenden Stäben der Käfigwicklung schlupffrequente, in Stablängsrichtung fließende Ströme induziert werden. Dieser schlupffrequente Strom im radial innenliegenden Stab bewirkt ein Nutquerfeld, das im radial außenliegenden Stab Wirbel der elektrischen Feldstärke hervorruft, so daß sich längs des radial außenliegenden Stabes elektrische Spannungen aufbauen und der radial außenliegende Stab von Wirbelströmen durchflossen ist. Damit diese Spannungen nicht durch das Blechpaket kurzgeschlossen werden und unkontrollierte Ströme über das Blechpaket fließen, sind die radial außenliegenden Stäbe gegenüber dem Blechpaket isoliert. Der bekannte Stromverdrängungsmotor unterliegt schwierigen Anlaufbedingungen. Bei einem Anlauf können die radial außenliegenden Stäbe einige 100 K Übertemperatur erreichen. Sie sind daher mit hitzebeständigem, imprägniertem Glas-Asbestgewebe gegenüber dem Läuferblechpaket isoliert.

Der Erfindung liegt die Aufgabe zugrunde, bei einer elektrischen Maschine der eingangs beschriebenen Art den Isolationsaufwand an der Käfigwicklung des Läufers zu verringern.

Zur Lösung dieser Aufgabe ist gemäß der Erfindung jeder radial außenliegende Stab in wenigstens zwei in axialer Richtung hintereinanderliegende, gegeneinander isolierte Teilstäbe aufgeteilt. Bei einer derartigen elektrischen Maschine bilden sich die Wirbelströme in jedem Teilstab aus, so daß wegen deren geringerer Länge die elektrischen Spannungen längs eines Teilstabes kleiner sind und eine qualitativ weniger aufwendige Isolierung bzw. eine gleich hochwertige Isolierung dünnerer Wandstärke verwendet werden kann. Bei Verwendung einer dünnen, hochwertigen Isolierung kann bei gleicher Nutform mehr leitfähiges Material in der Nut untergebracht werden. Ferner ist die Entwärmung des radial außenliegenden Stabes durch das Läufereisen aufgrund des geringen thermischen Widerstandes der dünneren Isolierung verbessert.

Diese Anordnung empfiehlt sich sowohl bei einer als Käfigwicklung ausgebildeten Läuferwicklung einer Asynchronmaschine als auch bei der für den Anlauf verwendeten Dämpferwicklung eines Synchronmotors.

Die Isolierung zwischen Teilstab und dem Läuferblechpaket kann entfallen, wenn die Oberflächen der Teilstäbe oder die Oberflächen der Nuten eine elektrisch isolierende, abriebfeste Schicht aufweisen. Diese kann durch eine Oberflächenbehandlung, z. B. Phosphatierung, hergestellt werden. Die Oberflächenbehandlung kann eingespart werden, wenn die Teilstäbe derart kurz dimensioniert werden, daß die elektrischen Spannungen längs eines Teilstabes so klein sind, daß die natürlich vorhandenen Oxidschichten an der Oberfläche des Teilstabes oder an der Nutoberfläche zur Isolation gegenüber dem Läuferblechpaket ausreichen. Dabei ist zu beachten, daß die Teilstäbe noch ausreichend lang sind, damit sich im Teilstab Wirbelströme ausreichender Größe ausbilden können und der Motor das geforderte Anlaufmoment erbringen kann.

Besteht das Läuferblechpaket aus mehreren Teilblechpaketen, zwischen denen radiale Kühlkanäle verlaufen, so ist es vorteilhaft, wenn jeder sich über zwei oder mehrere Teilblechpakete erstreckende Teilstab im Bereich eines Kühlkanals oder mehrerer Kühlkanäle gegen axiales Verschieben gesichert ist. Mechanische Spannungen bei Erwärmung werden vermieden, wenn der Teilstab nur in einem Kühlkanal gesichert ist, da sich dann der Teilstab frei ausdehnen kann. Fertigungstechnisch einfach ist die Sicherung gegen axiales Verschieben durch ein Verstemmen des Teilstabes realisierbar. Wenn die Enden der Teilstäbe in den Kühlkanälen liegen und von den benachbarten Teilstäben durch einen Zwischenraum getrennt sind, ist eine einfache Isolation der Teilstäbe gegeneinander durch das den Kühlkanal durchströmende Kühlmedium gegeben. Dabei ist der Zwischenraum so zu dimensionieren, daß sich die Teilstäbe bei Erwärmung nicht berühren.

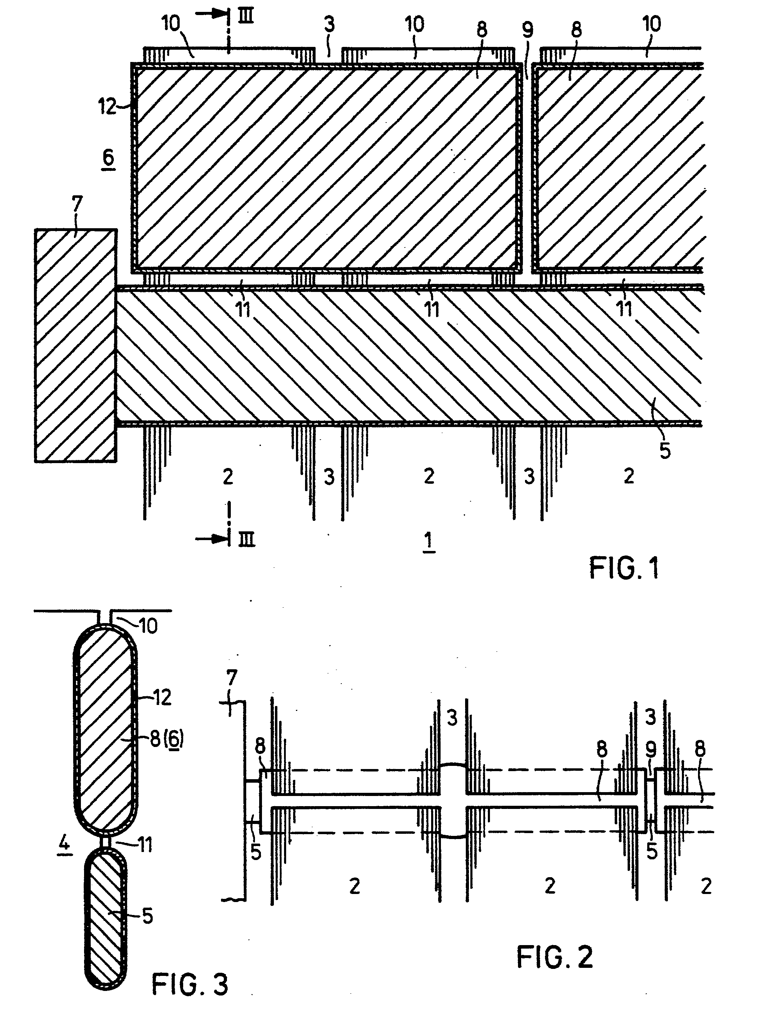

Im folgenden sei die Erfindung noch anhand des in den Figuren 1 bis 3 der Zeichnung dargestellten Ausführungsbeispiels näher erläutert.

Figur 1 zeigt einen Teil eines durch die Mitte einer Nut verlaufenden Längsschnitts des radial außenliegenden Teils des Läufers eines gemäß der Erfindung ausgebildeten asynchronen Motors. In Figur 2 ist eine Ansicht der Oberfläche des Läufers vom Luftspalt her gesehen dargestellt. Figur 3 zeigt einen Schnitt längs der Linie III - III in Figur 1.

Ein gemäß der Erfindung ausgebildeter Asynchronmotor hoher Leistung wird von einem starren Netz gespeist. Er weist im Bereich der Nenndrehzahl eine steile Drehzahl-Drehmoment-Charakteristik auf, entwickelt aber beim Anlauf ein hohes Drehmoment, wobei der Einschaltstrom unterhalb des zulässigen Wertes bleibt.

Das Läuferblechpaket 1 des Asynchronmotors besteht aus mehreren Teilblechpaketen 2, die in axialer Richtung einen Abstand zueinander aufweisen, wodurch radiale Kühlkanäle 3 zwischen ihnen gebildet sind. Das Läuferblechpaket 1 ist zur Aufnahme der Läuferwicklung genutet. In jeder Nut 4 sind zwei in radialer Richtung übereinanderliegende Stäbe 5,6 angeordnet, die sich im wesentlichen in axialer Richtung erstrecken. Die radial innenliegenden Stäbe 5 sind in üblicher Weise eingepreßt. Sie durchdringen das gesamte Läuferblechpaket 1 und sind an dessen Stirnseiten über Kurzschlußringe 7 untereinander verbunden und bilden dadurch eine Käfigwicklung.

Die radial außenliegenden Stäbe 6 sind in mehrere axial hintereinanderliegende Teilstäbe 8 aufgeteilt. Die Stirnseiten benachbarter Teilstäbe 8 liegen in den Kühlkanälen 3 und sind durch einen Zwischenraum 9 voneinander galvanisch getrennt. Jeder Teilstab 8 durchdringt zwei Teilblechpakete 2 und ist im Kühlkanal 3, der von ihm durchsetzt wird, verstemmt, wodurch er in axialer Richtung unverschieblich ist (Figur 2).

Wie Figur 3 zeigt, sind die Nuten 4 durch die Stege 10 an den Zahnköpfen halbgeschlossen und weisen einen Zwischensteg 11 auf. Die Stege 10 bzw. die Zwischenstege 11 sichern die Teilstäbe 8 bzw. die Stäbe 5 gegen Fliehkräfte. Sowohl die Stäbe 5, als auch die Teilstäbe 8 sind als Hochstäbe mit im wesentlichen rechteckförmigen Querschnitt und runden Schmalseiten ausgebildet. Die Teilstäbe 8 sind höher und breiter als die Stäbe 5, damit der Asynchronmotor ein hohes Anlaufmoment abgeben kann. Das Verhältnis der Höhen der Stäbe zueinander ist etwa 1,5 : 1. Die Stäbe 5 und die Teilstäbe 8 bestehen aus dem gleichen Werkstoff, damit zwischen ihnen beim Anlauf, bei dem die Teilstäbe 8 sehr heiß werden, keine elektro-chemischen Reaktionen auftreten. Sie sind aus Elektrolytkupfer, wodurch einerseits die Stäbe 5 niederohmig sind und eine steile Drehzahl-Drehmoment-Charakteristik bei Nenndrehzahl erzielt ist und andererseits in den Teilstäben 8 beim Anlauf hohe Wirbelströme fließen, wodurch man das hohe Anlaufmoment des Motors erhält.

Gegenüber dem Läuferblechpaket 1 sind die Teilstäbe 8 aus Elektrolytkupfer durch die natürlich vorhandene Oxidschicht 12 an ihrer Oberfläche isoliert. Diese Schicht reicht zur Isolation aus, da die Teilstäbe 8 so dimensioniert sind, daß längs eines Teilstabes 8 nur Spannungen von einigen 100 mV induziert werden.

Die Langzeitstabilität dieser Art der Isolierung ist hoch, da sich nach einigen Anläufen des Asynchronmotors und den damit verbundenen Erwärmungen der Stäbe 5, 6 die Oxidschichten auf den Stäben 5, 6 verstärkt haben.

Es können aber auch offene Nuten mit Nutenverschlußkeilen verwendet werden, dann können die Teilstäbe vom Umfang her eingelegt werden und die Gefahr einer unerwünschten Zerstörung der Oxidschicht ist geringer als beim Einpressen der Stäbe von den Stirnseiten her.

**Patentansprüche**

1. Elektrische Maschine synchroner oder asynchroner Bauart mit einer Käfigwicklung in einem genuteten Läuferblechpaket (1), bei der in den Nuten (4) der Käfigwicklung zwei sich im wesentlichen in axialer Richtung erstreckende, in radialer Richtung ohne galvanischen Kontakt übereinanderliegende Stäbe (5, 6) angeordnet sind, wobei nur die radial innenliegenden Stäbe (5) der Käfigwicklung durch Kurzschlußringe (7) an den Stirnseiten des Blechpaketes untereinander verbunden und wenigstens die radial außenliegenden Stäbe gegenüber dem Läuferblechpaket isoliert sind , **dadurch gekennzeichnet,** daß jeder radial außenliegende Stab (6) in wenigstens zwei in axialer Richtung hintereinanderliegende, gegeneinander isolierte Teilstäbe (8) aufgeteilt ist.

2. Elektrische Maschine nach Anspruch 1, **dadurch gekennzeichnet,** daß die Oberflächen der Teilstäbe (8) eine elektrisch isolierende, abriebfeste Schicht aufweisen, welche die Teilstäbe (8) gegenüber dem Läuferblechpaket (1) isolieren.

3. Elektrische Maschine nach Anspruch 2, **dadurch gekennzeichnet,** daß jeder Teilstab (8) durch die natürlich vorhandene Oxidschicht (12) an seiner Oberfläche gegenüber dem Läuferblechpaket (1) isoliert ist.

4. Elektrische Maschine nach Anspruch 1 oder 2, **dadurch gekennzeichnet,** daß das Läuferblechpaket (1) aus mehreren Teilblechpaketen (2) besteht, zwischen denen radiale Kühlkanäle (3) verlaufen, daß jeder Teilstab (8) sich über zwei oder mehrere Teilblechpakete (2) erstreckt und im Bereich eines Kühlkanals (3) oder mehrerer Kühlkanäle (3) gegen axiales Verschieben gesichert ist.

5. Elektrische Maschine nach Anspruch 4, **dadurch gekennzeichnet,** daß die Enden benachbarter Teilstäbe (8) in den Kühlkanälen (3) liegen und voneinander durch einen Zwischenraum (9) getrennt sind.

6. Elektrische Maschine nach Anspruch 4 oder 5, **dadurch gekennzeichnet,** daß jeder Teilstab (8) sich über zwei Teilblechpakete (2) erstreckt, wobei er im Kühlkanal (3) zwischen ihnen verstemmt ist.

**Claims**

1. Electrical machine of the synchronous or asynchronous type, having a cage winding in a slotted laminated rotor core (1), in which two bars (5, 6) are arranged in the slots (4) of the cage winding, which bars extend substantially in the axial direction and are superposed in the radial direction without galvanic contact, only the radially enclosed bars (5) of the cage winding being interconnected by means of short-circuiting rings (7) on the forward sides of the laminated core, and at least the radially external bars being insulated from the laminated rotor core, characterised in that each radially external bar (6) is divided into at least two bar sections (8) which are placed consecutively in the axial direction and are insulated from each other.

2. Electrical machine according to claim 1, characterised in that the surface of the bar sections (8) have an electrically insulating, abrasion-resistant layer, which surfaces insulate the bar sections (8) from the laminated rotor core (1).

3. Electrical machine acooding to claim 2, characterised in that each bar section (8) is insulated from the laminated rotor core (1) by the naturally present oxide layer (12) on its surface.

4. Electrical machine according to claim 1 or 2, characterised in that the laminated rotor core (1) consists of several laminated core sections (2) with radial ventilating ducts (3) running between them, and that each bar section (8) extends over two or more laminated core sections (2), and is secured against axial displacement in the area of a ventilating duct (3) or of several ventilating ducts (3).

5. Electrical machine according to claim 4, characterised in that the ends of adjacent bar sections (8) are located in the ventilating ducts (3) and are separated from each other by an interspace (9).

6. Electrical machine according to claim 4 or 5, characterised in that each bar section (8) extends over two laminated core sections (2), the bar section being stopped in the ventilating duct (3) between them.

## Revendications

1. Machine électrique de type synchrone ou asynchrone, comportant un enroulement en cage d'écureuil disposé dans un paquet de tôles rotoriques (1) comportant des encoches, et dans laquelle deux barres (5, 6), qui s'étendent sensiblement dans la direction axiale et sont superposées dans une direction radiale, sans contact galvanique, sont disposées dans les encoches (4) de l'enroulement en cage d'écureuil, et dans laquelle seules les barres (5), intérieures du point de vue radial, de l'enroulement en cage d'écureuil sont reliées entre elles par des bagues de court-circuit (7) au niveau des faces frontales du paquet de tôles, et au moins les barres, situées radialement à l'extérieur, sont isolées par rapport au paquet de tôles rotoriques, caractérisé par le fait que chaque barre (6), située à l'extérieur du point de vue radial, est subdivisée en au moins deux barres partielles (8) isolées l'une par rapport à l'autre et situées l'une derrière l'autre dans la direction axiale.

2. Machine électrique suivant la revendication 1, caractérisée par le fait que les surfaces des barres partielles (8) comportent des couches respectives, électriquement isolantes et résistantes à l'usure, qui isolent les barres partielles (8) par rapport au paquet de tôles rotoriques (1).

3. Machine électrique suivant la revendication 2, caractérisée par le fait que chaque barre partielle (8) est isolée par rapport au paquet de tôles rotoriques (1), par la couche d'oxyde (12), qui se forme naturellement au niveau de la surface de cette barre.

4. Machine électrique suivant la revendication 1 ou 2, caractérisée par le fait que le paquet de tôles rotoriques (1) est constitué par plusieurs paquets partiels de tôles (2), entre lesquels s'étendent des canaux radiaux de refroidissement (3), que chaque barre partielle (8) s'étend sur deux ou plusieurs paquets partiels de tôles (2) et est bloquée contre un déplacement axial, dans la zone d'un canal de refroidissement (3) ou de plusieurs canaux de refroidissement (3).

5. Machine électrique suivant la revendication 4, caractérisée par le fait que les extrémités de barres partielles (8) sont situées dans les canaux de refroidissement (4) et sont séparées les unes des autres par un espace intercalaire (9).

6. Machine électrique suivant la revendication 4 ou 5, caractérisée par le fait que chaque barre partielle (8) s'étend sur deux paquets partiels de tôles (2), en étant bloquée par serrage entre ces paquets de tôles dans le canal de refroidissement (2).

FIG. 1

FIG. 2

FIG. 3